# EUROPÄISCHE PATENTSCHRIFT

(11) **EP 0 456 129 B1**
(45) Veröffentlichungstag und Bekanntmachung des Hinweises auf die Patenterteilung: **20.09.1995**
(21) Anmeldenummer: 91107206.4
(22) Anmeldetag: 03.05.1991
(51) Int. Cl.: H04M 19/02, H04M 19/04

(54) **Schaltungsanordnung für an eine digitale Anschlussleitung angeschlossene analog betriebene Fernsprech-Endgeräte**
Circuit for analogic terminal telephone sets connected to a digital line
Circuit pour terminaux téléphoniques analogiques raccordés à une ligne numérique

(30) Priorität: 09.05.1990 DE 4014803
(43) Veröffentlichungstag der Anmeldung: 13.11.1991
(73) Patentinhaber: BOSCH TELECOM ÖFFENTLICHE VERMITTLUNGSTECHNIK GmbH, 65760 Eschborn (DE)
(72) Erfinder: Roth, Peter, Dipl.-Ing., W-6000 Frankfurt/M 60 (DE); Volk, Thomas, Dipl.-Ing., W-6305 Busseck (DE); Wagner, Reinhard, Dipl.-Ing., W-6507 Ingelheim (DE)

(56) Entgegenhaltungen:
- EP-A- 0 291 307
- DE-A- 3 704 368
- US-A- 3 904 833
- PATENT ABSTRACTS OF JAPAN vol. 013, no. 304 (E-786) 12. Juli 1989 & JP-A-10 081 490
- TN NACHRICHTEN Nr. 89, 1986, FRANKFURT - DE Seiten 28 - 36; B. ARTUN ET AL: 'ISDN - SCHNITTSTELLEN IM TEILNEHMERANSCHLUSSBEREICH'

## Beschreibung

Die Erfindung betrifft eine Schaltungsanordnung für an eine digitale Anschlußleitung angeschlossene analog betriebene Fernsprech-Endgeräte nach dem Oberbegriff des Patentanspruches 1.

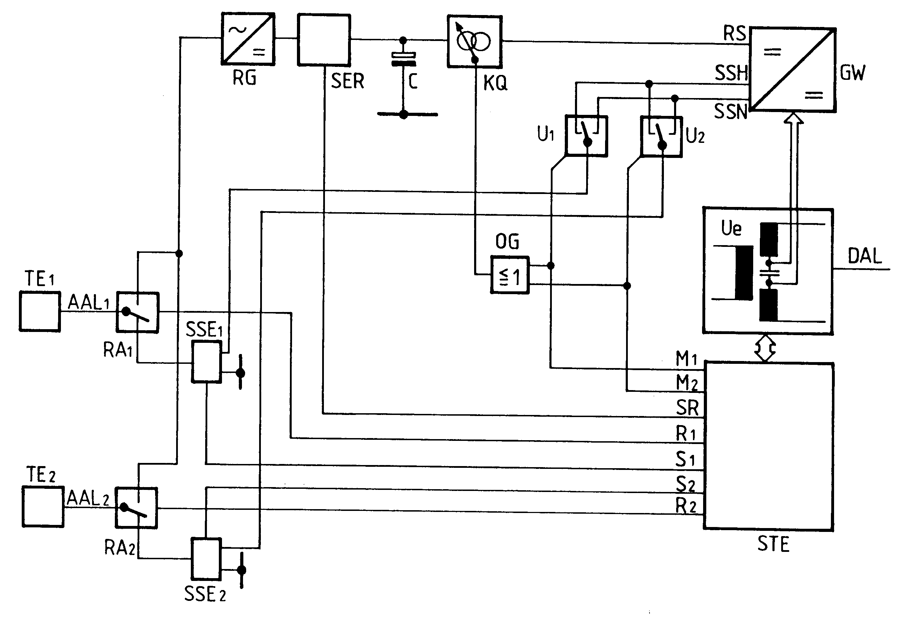

In einem Sonderdruck der Firma kabelmetal electro, der zu einem Vortrag anläßlich der VDPI-Tagung am 5. und 6. März 1987 erschienen ist, wird das sogenannte PCM-2D-System beschrieben. Es handelt sich dabei um: "Ein heute verfügbares System für Festverbindungen zwischen ISDN-Basisanschlüssen." Dort wird auf Seite 4.16 in Kapitel 7 das System PCM2A als analoges Pendant zu PCM2D beschrieben. Dieses System PCM2A dient dazu, analoge Endgeräte über digitale Anschlußleitungen zu betreiben. Zu diesem Zweck gibt es auf der Vermittlungsseite eine Einrichtung PCM2VA, welche als Schnittstelle zwischen den Anschlußorganen der Vermittlungsstelle und der digitalen Anschlußleitung dient. Wie aus den Blockschaltbildern (Bilder 19 bis 21) zu entnehmen ist, werden die Teilnehmer-Endgeräte über die digitale Anschlußleitung ferngespeist. Alle von den Anschlußorganen der Vermittlungsstelle (OVSt) ausgeführten Funktionen werden digital übertragen und von der teilnehmerseitigen Schnittstelle PCM2TA so umgesetzt, daß die Endgeräte ihre Funktion erfüllen. Dasselbe geschieht mit den Funktionen, die von den Endgeräten ausgehen in umgekehrter Richtung. Um alle Funktionen erfüllen zu können, ist auf der Teilnehmerseite, das heißt in der Einrichtung PCM2TA, eine bestimmte elektrische Leistung erforderlich, welche über die digitale Anschlußleitung übertragen werden muß. Je größer dieser Leistungsbedarf ist, um so mehr verringert sich die Reichweite, welche mit der digitalen Anschlußleitung überbrückt werden kann. Durch die Digitalisierung wird die Reichweite dann nicht mehr von den Übertragungseigenschaften beeinflußt, sondern sie ist direkt abhängig vom Speisestrombedarf, welcher über die digitale Anschlußleitung zur Verfügung gestellt werden muß.

Es ist Aufgabe der Erfindung, eine Schaltungsanordnung anzugeben, womit die maximale Speisereichweite der digitalen Anschlußleitung auch in den besonders kritischen Verbindungszuständen, beispielsweise Rufzustand, stark erhöht werden kann.

Zur Lösung dieser Aufgabe sind Merkmale vorgesehen, wie sie im Patentanspruch 1 angegeben sind.

Damit wird in vorteilhafter Weise erreicht, daß die Speisereichweite bei über eine digitale Anschlußleitung ferngespeisten Teilnehmer-Endgeräten nicht durch den Betriebsfall eingeengt wird, bei dem die meiste Energie benötigt wird. Die Speisereichweite wird erheblich erhöht, ohne daß die über eine digitale Anschlußleitung zu erbringende Speiseleistung erhöht werden muß, und ohne daß Funktionsbeschränkungen in Kauf zu nehmen sind.

In den Unteransprüchen sind weitere Maßnahmen beschrieben, die zu Energieeinsparungen führen, welche einer Erhöhung der Speisereichweite dienen.

Ein Ausführungsbeispiel der Erfindung wird nachfolgend anhand einer Zeichnung näher beschrieben. Die über eine digitale Anschlußleitung DAL anliegende Speisespannung wird einem Gleichspannungswandler GW zugeführt, welcher neben der Versorgungsspannung für Steuereinrichtungen eine Rufspannung RS sowie Speisespannungen SSH und SSN erzeugt. Die digitale Anschlußleitung ist außerdem an eine Steuereinrichtung STE angekoppelt, welche unter anderem die jeweiligen Betriebszustände eines jeden Teilnehmer-Endgerätes TE1 und TE2 erkennen kann.

Die Rufspannung RS ist eine Gleichspannung, womit über eine Konstantstromquelle KQ ein Energiespeicher, beispielsweise ein Kondensator C, aufgeladen wird. Von dort aus wird die Rufspannung über einen nur im Rufzustand aktiven Schleifenstromerkenner SER einem Rufstromgenerator RG zugeführt. Der Rufstromgenerator RG liefert in bekannter Weise eine Rufwechselspannung, welche jeweils an eine analoge Anschlußleitung AAL1 beziehungsweise AAL2 angelegt wird, wenn das betreffende TeilnehmerEndgerät TE1, beziehungsweise TE2 gerufen werden soll. Hierzu dienen Rufanschalteeinrichtungen RA1, beziehungsweise RA2, welche von der Steuereinrichtung STE dann aktiviert werden, wenn ein Rufzustand besteht und die Rufphase für das betreffende Endgerät TE1 oder TE2 vorliegt. Das Vorliegen eines Rufzustandes wird in bekannter weise über die digitale Anschlußleitung DAL mit einer besonderen Signalisierung der Steuereinrichtung STE mitgeteilt. Innerhalb der Steuereinrichtung STE ist jedem TeilnehmerEndgerät TE1 und TE2 eine Rufphase fest zugeteilt, so daß auch beim Vorliegen der Rufzustände für beide Teilnehmer-Endgeräte TE1 und TE2 der Rufstrom zu unterschiedlichen Zeiten ausgesendet wird. Die Rufphasen sind innerhalb des zur Verfügung stehenden Zeitraumes von beispielsweise fünf Sekunden so aufgeteilt, daß zwischen jedem Rufimpuls von beispielsweise einer Sekunde Dauer eine Pause entsteht, bis der Ruf zu jeweils anderen Endgeräten ausgesendet wird. Dadurch wird die Möglichkeit geschaffen, daß sich der als Energiespeicher verwendete Kondensator C in der Zwischenzeit wieder aufladen kann.

Während der Rufstromaussendung ist diejenige analoge Anschlußleitung AAL1 oder AAL2 jeweils mit dem gemeinsamen Schleifenstromerkenner SER verbunden. Wenn während der Rufstromaussendung ein Schleifenstromfluß erkannt wird, so meldet der gemeinsame Schleifenstromerkenner SER dies über eine Steuerleitung SR der Steuereinrichtung STE. Daraufhin wird die betreffende Rufstromanschalteeinrichtung RA1 oder RA2 sofort in den Ruhezustand versetzt. Dabei erkennt die Steuereinrichtung STE an der gerade vorliegenden Rufphase, auf welcher analogen Anschlußleitung AAL1 oder AAL2 der Schleifenstromfluß erkannt worden ist.

Nach dem Abschalten des Rufwechselstromes wird die Speisung der jeweiligen analogen Anschlußleitung AAL1 beziehungsweise AAL2 von dem jeweils individuellen Schleifenstromerkenner SSE1 beziehungsweise SSE2 übernommen. Diese Schleifenstromerkenner SSE1 und SSE2 erkennen auch den Beginn eines Schleifenstromflusses, wenn er außerhalb der Rufphasen stattfindet. Dies wird der Steuereinrichtung STE über Steuerleitungen S1, beziehungsweise S2 mitgeteilt. Wenn dies der Fall ist, so können die Steuerleitungen für die Rufstromanschaltung R1 und R2 von der Steuereinrichtung STE aus nicht aktiviert werden, so daß eine Rufstromanschaltung unterbleibt. Das gleiche geschieht auch, wenn, wie bereits beschrieben worden ist, über den gemeinsamen Schleifenstromerkenner SER das Fließen eines Schleifenstromes festgestellt wird.

Wenn auf die vorbeschriebene Weise erkannt worden ist, daß auf einer analogen Anschlußleitung AAL 1 oder AAL2 ein Schleifenstrom fließt, so wird dies in der Steuereinrichtung STE registriert. Mit für jede einzelne analoge Anschlußleitung AAL1 und AAL2 vorhandenen Steuerleitungen M1 und M2 werden Umschalteinrichtungen U1, beziehungsweise U2 betätigt, womit die Speisespannung von einem für den Ruhezustand vorgeschriebenen höheren Wert (SSH) auf einen für den Schleifenstrom erforderlichen niedrigen Wert (SSN) umgeschaltet. Der jeweils niedrigere Wert SSN der Speisespannung ist so dimensioniert, daß ein vorgegebener Speisestrom auf der analogen Anschlußleitung AAL bei einer vorgegebenen Reichweite fließt. Dabei ist berücksichtigt, daß die individuellen Schleifenstromerkenner SSE1 und SSE2 als Konstantstromquellen ausgelegt sind, womit eine Drosselwirkung für die Sprechströme verbunden ist. Da die individuellen Schleifenstromerkenner SSE1 , SSE2 nicht mit Rufwechselstrom belastet werden, können sie einfacher, das heißt platzsparender und wirtschaftlicher dimensioniert werden.

Es ist außerdem ein Odergatter OG vorgesehen, welches innerhalb oder außerhalb der Steuereinrichtung STE angeordnet sein kann. Die Eingänge dieses Odergatters OG sind mit den den jeweiligen Schleifenstromfluß repräsentierenden Steuerleitungen M1 und M2 verbunden. Somit erscheint am Ausgang des Odergatters OG immer dann ein Signal, wenn auf mindestens einer der analogen Anschlußleitungen AAL ein Schleifenstrom fließt. Mit diesem Ausgangssignal des Odergatters OG wird die Konstantstromquelle KQ auf einen niedrigeren Stromwert geschaltet. Der Ladestrom für den als Energiespeicher verwendeten Kondensator C wird dadurch verringert. Dies bedeutet, daß der Gleichspannungswandler weniger belastet wird. Diese zur Energieeinsparung dienende Maßnahme kann durchgeführt werden, weil der Rufzustand für diejenige analoge Anschlußleitung AAL nicht mehr eintreten kann, bei der ein Schleifenstromfluß zuvor festgestellt wurde. Somit ist der Rufstrombedarf für mindestens ein Teilnehmer-Endgerät TE weniger aufzubringen.

Das in der Zeichnung für zwei Teilnehmer-Endgeräte TE1 und TE2 dargestellte Beispiel kann theoretisch auch für mehrere Teilnehmer-Endgeräte ausgelegt werden. Die Steuereinrichtung STE ist dann entsprechend zu erweitern und auf der digitalen Anschlußleitung DAL sind entsprechend mehr Nutzdatenkanäle bereitzustellen. Vorerst wird jedoch nur der Anschluß von zwei Teilnehmer-Endgeräten TE1 und TE2 vorgesehen, weil das bekannte PCM-2-System zugrunde gelegt werden soll.

## Patentansprüche

1. Schaltungsanordnung für an eine digitale Anschlußleitung (DAL) angeschlossene analog betriebene Fernsprech-Endgeräte, durch die alle Signalisierungs- und Nutzinformationen umgesetzt werden in die an dem jeweiligen Empfänger angepaßte digitale oder analoge Form, und durch die analog betriebene Endgeräte über die digitale Anschlußleitung ferngespeist werden,
dadurch gekennzeichnet,
daß für die Rufstromerzeugung ein Energiespeicher (C) vorgesehen ist, der über eine Konstantstromquelle (KQ) so aufgeladen wird, daß der Energiebedarf für das Rufen mehrerer Teilnehmer-Endgeräte (TE1, TE2) zur Verfügung steht,
daß eine Steuereinrichtung (STE) und ein Oder-Gatter (OG) vorhanden sind, wobei die Eingänge dieses Oder-Gatters (OG) mit den den jeweiligen Schleifenstromfluß repräsentierenden Steuerleitungen (M1 und M2) dieser Steuereinrichtung (STE) verbunden sind, durch die die Konstantstromquelle (KQ) auf einen niedrigeren Stromwert geschaltet wird, wenn mindestens an einem der Teilnehmer-Endgeräte (TE1, TE2) der Belegtzustand erkannt wird, so daß weniger Teilnehmer-Endgeräte (TE1, TE2) in den Rufzustand gelangen können, und daß beim gleichzeitigen Anstehen von Rufzuständen für mehrere Teilnehmer-Endgeräte (TE1, TE2) die Rufstromaussendung in unterschiedlichen Phasen erfolgt.

2. Schaltungsanordnung nach Anspruch 1,
dadurch gekennzeichnet,
daß mit Hilfe einer Steuereinrichtung (STE) zwischen den Rufphasen Pausen eingelegt werden, damit der Energiespeicher (C) zwischenzeitlich wieder aufgeladen werden kann.

3. Schaltungsanordnung nach Anspruch 1,
dadurch gekennzeichnet,
daß neben den jeweils einer analogen Anschlußleitung (AAL1, AAL2) zugeordneten Schleifenstromerkennern (SSE1, SSE2) noch ein gemeinsamer Schleifenstromerkenner (SER) vorgesehen ist, der nur im Rufzustand anspricht , wenn gerade Rufstrom ausgesendet wird, und daß von der Steuereinrichtung (STE) an der Rufphase erkannt wird, an welchem Teilnehmer-Endgerät (TE1, TE2) der Betriebszustand sich verändert hat.

4. Schaltungsanordnung nach Anspruch 1,
dadurch gekennzeichnet,
daß die Schleifenspannung für eine analoge Anschlußleitung (AAL1, AAL2) von einem höheren Wert (SSH) im Ruhezustand auf einen niedrigeren Wert (SSN) im Belegtzustand umgeschaltet wird, wenn das Fließen eines Schleifenstromes erkannt wird,
und daß diese niedrigere Schleifenspannung (SSN) auf einen Wert eingestellt wird, der bei maximal zulässiger Speisereichweite den erforderlichen Schleifenstrom auf der analogen Anschlußleitung (AAL1, AAL2) garantiert.

## Claims

1. Circuit arrangement for analog telephone terminals connected to a digital subscriber line (DAL), by means of which all signalling and user information items are converted into the digital or analog form adjusted to the respective receiver, and by means of which analog terminals are power-fed via the digital subscriber line, characterized in that, for the purpose of generating ringing current, an energy store (C) is provided which is charged up via a constant-current source (KQ) in such a manner that the energy required for ringing a number of subscriber terminals (TE1, TE2) is available, in that a control device (STE) and an OR gate (OG) are present, the inputs of this OR gate (OG) being connected to the control lines (M1 and M2) of this control device (STE) representing the respective loop current flow, by means of which the constant current source (KQ) is switched to a lower current value when the busy state is detected at least at one of the subscriber terminals (TE1, TE2) so that fewer subscriber terminals (TE1, TE2) can reach the ringing state, and in that when ringing states are simultaneously present for a number of subscriber terminals (TE1, TE2), the ringing current is sent out in different phases.

2. Circuit arrangement according to Claim 1, characterized in that, with the aid of a control device (STE), pauses are inserted between the ringing phases so that the energy store (C) can be charged up again in the meantime.

3. Circuit arrangement according to Claim 1, characterized in that, in addition to the loop current detectors (SSE1, SSE2) which are in each case allocated to one analog subscriber line (AAL1, AAL2), a common loop current detector (SER) is also provided which only operates in the ringing state when ringing current is being sent out, and in that the control device (STE) detects from the ringing phase the subscriber terminal (TE1, TE2) at which the operating state has changed.

4. Circuit arrangement according to Claim 1, characterized in that the loop voltage for an analog subscriber line (AAL1, AAL2) is switched from a higher value (SSH) in the idle state to a lower value (SSN) in the busy state when the flowing of a loop current is detected, and in that this lower loop voltage (SSN) is set to a value which guarantees the required loop current on the analog subscriber line (AAL1, AAL2) with the maximum permissible power-feeding range.

## Revendications

1. Circuit pour terminaux téléphoniques analogiques raccordés à une ligne numérique (DAL), circuit grâce auquel toutes les informations de signalisation et les informations utiles sont mises sous la forme numérique ou analogique adaptée au récepteur considéré, et grâce auquel des terminaux exploités analogiquement sont télé-alimentés par l'intermédiaire de la ligne numérique, circuit caractérisé en ce que pour produire le courant d'appel il est prévu un accumulateur d'énergie (C) qui est chargé par l'intermédiaire d'une source (KQ) de courant constant de façon que le besoin en énergie pour l'appel de plusieurs terminaux (TE1, TE2) soient disponibles, en ce qu'il est prévu un dispositif de commande (STE) et une porte OU (OG), tandis que les entrées de cette porte OU (OG) sont reliées aux lignes de commande (M1 et M2) représentant la conduction de courant de boucles respectives de ce dispositif de commande (STE), grâce auquel la source de courant constant (KQ) est commutée sur une valeur de courant plus basse, lorsque l'état d'occupation est détecté au moins sur un des terminaux (TE1, TE2), de sorte que moins de terminaux (TE1, TE2) peuvent parvenir à l'état d'appel, et en ce que, lors de l'apparition simultanée d'états d'appel pour plusieurs terminaux (TE1, TE2), l'émission du courant d'appel s'effectue dans des phases différentes.

2. Circuit selon la revendication 1, caractérisé en ce qu'à l'aide d'un dispositif de commande (STE) des poses sont intercalées entre les phases d'appel, afin que l'accumulateur d'énergie (C) puisse être rechargé dans l'intervalle.

3. Circuit selon la revendication 1, caractérisé en ce qu'à côté des détecteurs de courant de boucle (SSE1, SSE2) respectivement associés à une ligne analogique de raccordement (AAL1, AAL2) il est en outre prévu un détecteur de courant de boucle commun (SER) qui ne réagit qu'en état d'appel lorsque précisément le courant d'appel est émis, et en ce qu'il est détecté par le dispositif de commande (STE) à la phase d'appel à quel terminal (TE1, TE2) l'état de fonctionnement s'est modifié.

4. Circuit selon la revendication 1, caractérisé en ce que la tension de boucle pour une ligne de raccordement analogique (AAL1, AAL2) est commutée d'une hauteur plus élevée (SSH) à l'état de repos sur une grandeur plus basse (SSN) à l'état d'occupation, lorsque la circulation d'un courant de boucle est reconnue, et en ce que cette tension de boucle plus basse (SSN) est réglée à une valeur qui pour le rayon d'action d'alimentation maximale admissible garantit le courant de boucle nécessaire sur la ligne analogique de raccordement (AAL1, AAL2).
